# FASCICULE DE BREVET EUROPEEN

(11) **EP 0 745 569 B1**
(45) Date de publication et mention de la délivrance du brevet: **13.06.2001**
(21) Numéro de dépôt: 96401147.2
(22) Date de dépôt: 29.05.1996
(51) Int. Cl.: C03C 17/36, C03C 17/34, C03C 17/38, C03C 17/42

(54) **Substrats transparents revêtus d'un empilement de couches minces à propriété de reflexion dans l'infrarouge et/ou dans le domaine du rayonnement solaire**
Transparentes Substrat mit einer Häufung von Schichten mit Infrarot und/oder Sonnenstrahlung reflektierenden Eigenschaften
Transparent substrate coated with a multi-layered coating having reflective characteristics in the infrared and/or solar radiation region

(30) Priorité: 01.06.1995 FR 9506541
(43) Date de publication de la demande: 04.12.1996
(73) Titulaire: SAINT-GOBAIN GLASS FRANCE, 92400 Courbevoie (FR)
(72) Inventeur: Guiselin, Olivier, 75016 Paris (FR); Macquart, Philippe, 92600 Asnieres (FR); Rondeau, Veronique, 93700 Drancy (FR)
(74) Mandataire: Renous Chan, Véronique

(56) Documents cités:
- DE-U- 9 005 809
- US-A- 3 053 698
- US-A- 3 781 090
- CHEMICAL ABSTRACTS, vol. 94, no. 8, 23 Février 1981 Columbus, Ohio, US; abstract no. 51778, page 287; XP002010716 & JP-A-08 090 444 (TEIJIN LTD) 19 Juillet 1980

## Description

L'invention concerne les substrats transparents, notamment en verre, revêtus d'un empilement de couches minces comprenant au moins une couche métallique pouvant agir sur le rayonnement solaire et/ou sur le rayonnement infrarouge de grande longueur d'onde.

L'invention concerne également l'utilisation de tels substrats pour fabriquer des vitrages d'isolation thermique et/ou de protection solaire, ci-après désignés sous le terme de vitrages « fonctionnels ». Ces vitrages peuvent équiper aussi bien les bâtiments que les véhicules, en vue notamment de diminuer l'effort de climatisation et/ou de réduire une surchauffe excessive entraînée par l'importance toujours croissante des surfaces vitrées dans les pièces et habitacles.

Un type d'empilement de couches minces connu pour conférer à des substrats transparents des propriétés thermiques, tout particulièrement de bas-émissivité, est constitué principalement par une couche métallique, notamment en argent, disposée entre deux revêtements de matériau diélectrique du type oxide ou nitrure métallique. On le fabrique généralement par une succession de dépôts effectués par une technique utilisant le vide comme la pulvérisation cathodique, éventuellement assistée par champ magnétique. Peuvent aussi être prévues deux couches métalliques très fines de part et d'autre de la couche d'argent, la couche sous-jacente en tant que couche d'accrochage ou de nucléation, et la surcouche en tant que couche de protection ou « sacrificielle » afin d'éviter l'oxydation de l'argent, si la couche de diélectrique qui la surmonte est en oxyde déposé par pulvérisation réactive en présence d'oxygène.

Si la couche métallique, ci-après désignée sous le terme de couche « fonctionnelle », détermine pour l'essentiel les performances thermiques de l'empilement dans son ensemble, les couches de matériau diélectrique ont également un rôle important, puisqu'elles agissent sur l'aspect optique du substrat de manière interférentielle et permettent de protéger la couche « fonctionnelle » des aggressions chimiques ou mécaniques.

L'objectif permanent, avec ce type d'empilement, est de chercher à en améliorer les propriétés thermiques, anti-solaires ou de bas-émissivité. Deux voies ont déjà été proposées :
- la première solution, qui est la plus simple, pour abaisser la valeur d'émissivité ou augmenter la capacité anti-solaire d'une couche fonctionnelle est d'en augmenter l'épaisseur. Cependant, cette solution, avait jusque-là des répercussions désavantageuses sur l'aspect optique du substrat porteur de l'empilement, car elle entraîne une diminution de sa transmission lumineuse T_{L}, et, surtout, une coloration beaucoup plus marquée en réflexion, le plus souvent dans des teintes en outre peu esthétiques. On atteint donc rapidement une limite en termes d'épaisseur de couche fonctionnelle au-delà de laquelle le substrat ne répond plus aux critères optiques recherchés.
- la seconde solution consiste à améliorer la qualité de la couche « fonctionnelle », à épaisseur donnée, notamment en visant une meilleure cristallisation la rendant moins absorbante. On peut y parvenir en disposant sous la couche fonctionnelle un type particulier de matériau diélectrique qui favorise sa croissance, son « mouillage ». Ainsi, la demande de brevet européen EP-A-0 611 213 préconise sous la couche d'argent bas-émissive un revêtement de mouillage à base d'oxyde de niobium ou de tantale, tandis que la demande de brevet français 94/04810 déposée le 21 avril 1994 publiée sous le numéro FR-A-2 719 036 et correspondant à la demande de brevet européen EP-A-0 678 484, décrit un revêtement de mouillage « double » sous la couche bas-émissive et constitué d'une première couche d'oxyde de niobium ou de tantale surmontée d'une seconde couche d'oxyde de zinc. Cette solution a également ses limites, dans la mesure où la qualité de la couche fonctionnelle améliorée par ces couches sous-jacentes finit par atteindre un niveau maximal difficile à dépasser, à épaisseur de couche donnée.

Il est connu du certificat d'utilité DE-U-9005109 un revêtement pour substrat optique comprenant une ou plusieurs couches métalliques et des couches de diélectrique, ces couches de diélectrique pouvant être choisies en fluorure d'alcalins ou d'alcalino-terreux ou de lanthanides.

Il est également connu du brevet US-3,053,698 un revêtement déposé sur un substrat en verre et comprenant une couche de base très fine, par exemple en MgF₂, ZnS, SiO, SiO₂, Al₂O₃, TiO, TᵢO₂, ZrO₂ ou ZrSiO₄, puis une couche adhésive en oxyde métallique du type oxyde de fer, puis une couche conductrice électriquement de préférence en or.

Il est enfin connu des brevets US-3,781,090 un empilement de couches antireflet sur du verre composé de quatre couches, toutes choisies en matériau diélectrique du type oxyde de silicium, oxyde métallique ou fluorures comme MgF₂, LaF₂, Na₃AlF₄.

L'invention a alors pour but de pallier ces inconvénients en mettant au point un nouveau type d'empilements à couche(s) fonctionnelle(s) pour substrats transparents, qui présente des performances thermiques améliorées sans entraîner de modification défavorable de son aspect optique. Corollairement, l'invention a aussi pour but de mettre au point cet empilement de manière à ce qu'il présente des performances thermiques au moins aussi élevées que celles d'empilements existants, mais présentant un aspect optique amélioré. Plus précisément, le but visé par l'invention est de parvenir à conjuguer faible émissivité (ou forte capacité anti-solaire), haute transmission lumineuse et neutralité de coloration en réflexion.

L'invention a pour objet un vitrage présentant une haute transmission lumineuse incorporant un substrat transparent, notamment en verre, muni d'un empilement de couches minces comportant au moins une couche à propriétés de bas-émissivité et de conductivité électrique à base d'argent ou à base d'oxyde métallique dopé, ci-après appelée couche « fonctionnelle ». Cette couche se trouve disposée entre un premier et un second revêtements diélectriques. Selon l'invention, on dispose entre le substrat transparent et cet empilement une couche supplémentaire dite « intermédiaire » qui présente la particularité d'être constituée en un matériau d'indice de réfraction inférieur à celui du substrat transparent ; la différence entre l'indice de réfraction du substrat et celui de cette couche intermédiaire étant d'au moins 0,07 et de préférence d'au moins 0,12.

De manière surprenante, on s'est en effet aperçu qu'en interposant entre un empilement connu du type diélectrique / couche fonctionnelle / diélectrique et son substrat porteur une couche d'indice significativement plus faible que celui du substrat, on parvient à influer très avantageusement sur l'aspect optique du substrat, tout particulièrement en réflexion : on peut ainsi, à un niveau de performances thermiques donné choisi en fonction des caractéristiques et de l'épaisseur de la couche fonctionnelle, améliorer grandement la colorimétrie en réflexion du substrat, en « calant » le substrat dans une teinte en réflexion à la fois esthétique et très neutre.

L'invention offre en fait la possibilité d'élargir considérablement les possibilités en termes de compromis performances thermiques/performances optiques : on peut ainsi plutôt choisir un niveau de propriétés thermiques déjà atteint par des empilements similaires connus, afin d'obtenir un gain substantiel en termes de neutralité de coloration en réflexion, critère de plus en plus recherché pour les vitrages destinés au bâtiment tout particulièrement. Mais on peut aussi choisir d'améliorer ce niveau de propriétés thermiques en épaississant la couche fonctionnelle, en étant beaucoup moins pénalisé qu'auparavant sur le plan de l'aspect optique en réflexion, notamment en repoussant significativement la valeur d'épaisseur maximale de la couche fonctionnelle au-delà de laquelle le substrat « bascule » vers une coloration en réflexion de teinte inacceptable, par exemple pourpre, et/ou vers une intensité de coloration en réflexion trop élevée.

Les raisons de l'effet technique de cette couche intermédiaire à bas indice sont complexes. Il semblerait en fait que l'aspect optique, particulièrement en réflexion, du substrat muni de l'empilement soit lié, entre autres, à la différence d'indices de réfraction entre le matériau diélectrique sous-jacent à la couche fonctionnelle et le substrat porteur, et que l'aspect en réflexion soit d'autant meilleur que cette différence est importante. La couche intermédiaire de l'invention agirait alors un peu comme si elle abaissait superficiellement l'indice de réfraction du substrat, et donc comme si elle permettait d'augmenter cette différence d'indices de réfraction. C'est une solution tout-à-fait avantageuse car simple à réaliser techniquement : elle ne nécessite pas de bouleverser la structure ou la nature des matériaux utilisés dans les empilements connus de type diélectrique/couche fonctionnelle/diélectrique.

Il va de soi, cependant, que choisir sous la couche fonctionnelle un matériau diélectrique d'indice de réfraction élevé ne peut que renforcer encore l'effet bénéfique de la couche intermédiaire de l'invention sur l'aspect optique du substrat, en augmentant encore cette différence d'indices de réfraction.

Avantageusement, on choisit une épaisseur géométrique de couche intermédiaire d'au moins 10 à 15 nm et de préférence comprise entre 20 et 120 nm, plus particulièrement entre 30 et 60 nm, gamme d'épaisseurs où se produit de manière optimale l'effet technique recherché.

Particulièrement lorsqu'on choisit un substrat transparent en verre, ayant usuellement un indice de réfraction d'environ 1,50-1,54, et notamment d'environ 1,52 quand il s'agit de verre silico-sodo-calcique du type verre float, la couche intermédiaire selon l'invention est choisie avec un indice de réfraction inférieur ou égal à 1,45, notamment inférieur ou égal à 1,42 ou à 1,40, et de préférence compris entre 1,30 et 1,38.

Cependant, l'invention s'applique aussi avantageusement à d'autres types de substrats transparents, notamment à base de polymère rigide du type polyacrylique ou polycarbonate ou à base de polymère flexible du type polyester, polyimide, polyéthylène, polypropylène, et, de préférence, en polyéthylène téréphtalate. Dans ce dernier cas, on peut déposer l'empilement de couches minces sur le substrat flexible type PET, puis constituer un vitrage en l'assemblant avec un ou des substrats de verre, notamment par l'intermédiaire de feuilles intercalaires du type polyvinylbutyral PVB. Ce type de substrat flexible est en général choisi d'une épaisseur de 5 à 50 microns.

L'invention propose deux modes de réalisation pour la couche intermédiaire.

Il peut tout d'abord s'agir d'une couche de nature minérale, notamment en oxyde comme de l'oxyde de silicium SiO₂ ou SiOₓ avec x < 2 peu dense, qui peut présenter un indice d'environ 1,45 à 1,40, notamment 1,42 à 1,40. Dans le contexte de l'invention, on comprend par « peu dense » un oxyde de silicium qui présente une densité notamment d'au plus 95% de sa densité nominale qui est de 2,2, et notamment comprise entre 90 et 95% de ladite densité. La couche peut aussi être en oxyfluorure d'aluminium AlOₓF_{y}, atteignant des valeurs d'indice de réfraction de l'ordre de 1,37 en ajustant de manière adéquate le taux de fluor dans le composé. On peut aussi avoir recours à un fluorure comme le fluorure de magnésium MgF₂ d'indice environ 1,32 ou le fluorure d'aluminium AlF₃.

Mais la couche intermédiaire peut aussi être choisie de nature organique, notamment sous forme polymérique. On peut alors atteindre des indices de réfraction particulièrement bas, notamment d'au plus 1,35. La couche intermédiaire peut ainsi être à base de polymères organo-siliciés, par exemple obtenus à partir de monomères du type alkoxysilanes ou alkylsilanes par dépôt par C.V.D. (« Chemical Vapor Deposition » : dépôt par pyrolyse en phase gazeuse) plasma, comme cela est décrit dans le brevet EP-B-0 230 188 auquel on se rapportera pour plus de détails.

On peut aussi utiliser des polymères fluorés et/ou à base de polyacrylates mono ou polyfonctionnels, comme le perfluoro-polyétherdiacrylate d'indice de réfraction d'environ 1,32. Ce type de polymère peut être déposé sur le substrat par une technique sous vide, notamment par évaporation des monomères volatils ou atomisation en micro-gouttelettes de monomères liquides, suivies par réticulation par irradiation, notamment par rayonnement ultraviolets ou faisceau d'ions. Pour plus de détails sur ces techniques de dépôt, ou pourra se reporter par exemple à la demande PCT WO94/04285 ou à la demande de brevet EP-A-0 340 935. Elles présentent l'avantage de pouvoir être utilisées en ligne, en continu sur des substrats en défilement, et de permettre sans interruption le dépôt consécutif des autres couches de l'empilement ayant recours également à une technique sous vide, du type pulvérisation cathodique assistée par champ magnétique.

Lorsqu'on choisit une couche intermédiaire de nature organique, tout particulièrement polymérique, on peut sélectionner son épaisseur dans la gamme des 20 à 120 nm pré-mentionnée. Mais on peut aussi obtenir avantageusement les mêmes effets techniques en choisissant des épaisseurs cette fois beaucoup plus importantes. La couche peut alors se présenter sous la forme d'un film d'au moins 2 micromètres d'épaisseur, notamment de 5 à 50 micromètres d'épaisseur : un matériau organique du type polymère permet en effet d'atteindre de telles épaisseurs sans être pénalisé en termes de coût ou de vitesse de dépôt comme cela pourrait être le cas d'un matériau minéral type oxyde. A de telles épaisseurs qui ne sont plus interférentielles, on « retrouve » en fait l'effet technique observé plus particulièrement dans la gamme d'épaisseurs interférentielles 20-120 nm, de manière surprenante.

La couche fonctionnelle est avantageusement en argent. Son épaisseur peut être choisie entre 7 et 13 nm, quand on vise l'obtention de vitrages à bas-émissivité et haute transmission lumineuse T_{L} (notamment une T_{L} d'au moins 70 à 80%), destinés à équiper plutôt bâtiments ou véhicules des pays froids.

Si l'on vise plutôt l'obtention de vitrages à fonction anti-solaire, réfléchissants et destinés à équiper plutôt des bâtiments ou véhicules des pays chauds, la couche d'argent peut être plus épaisse, présentant notamment des épaisseurs jusqu'à 20 à 25 nm (ce qui a alors pour conséquence une diminution de la transmission lumineuse, notamment jusqu'à des valeurs inférieures à 60%). L'invention peut aussi s'appliquer avantageusement à des empilements comprenant une pluralité de couches fonctionnelles, par exemple deux ou trois couches d'argent intercalées par des couches de matériau diélectrique : des empilements de ce type sont notamment décrits dans les demandes de brevet européen EP-A-0 638 528 et EP-A-0 645 352.

La couche fonctionnelle peut aussi être choisie à base d'oxyde métallique dopé, du type oxyde d'étain dopé au fluor SnO₂:F ou oxyde d'indium dopé à l'étain ITO, matériau conférant également au substrat des propriétés de bas-émissivité et de conductivité électrique. Elle peut être déposée par une technique sous vide du type pulvérisation cathodique, mais aussi par une technique de pyrolyse (par exemple à partir de dibutyltrifluorure d'étain pour SnO₂:F ou à partir de formiate d'indium pour ITO par pyrolyse de poudre, de manière connue).

De préférence, le premier revêtement diélectrique, c'est-à-dire celui qui est disposé entre la couche intermédiaire et la couche fonctionnelle, comprend au moins une couche en oxyde ou en nitrure d'indice de réfraction d'au moins 1,7 à 1,8, notamment d'environ 1,9 à 2,3. On a déjà évoqué le fait qu'on avait effectivement avantage à choisir un matériau d'indice de réfraction relativement élevé. Son épaisseur géométrique totale est notamment comprise entre 30 et 55 nm. Ce premier revêtement peut ainsi comprendre au moins une couche en oxyde d'étain (SnO₂), oxyde de niobium (Nb₂O₅), oxyde de zinc (ZnO), oxyde de titane (TiO₂), oxyde de tantale (Ta₂O₅), nitrure de silicium (Si₃N₄), oxyde de tungstène (WO₃), oxyde d'antimoine (Sb₂O₅) ou oxyde de bismuth (Bi₂O₃). II peut par exemple être constitué d'une seule couche d'oxyde d'étain. Il peut s'agir également d'une séquence oxyde de niobium/oxyde de zinc ou oxyde de tantale/oyxde de zinc, comme décrit dans la demande de brevet EP-A-0 678 484 précitée, ou encore d'une séquence oxyde d'étain/oxyde de niobium/oxyde de zinc,ou encore oxyde de tunsgtène/oxyde de zinc ou oxyde d'étain/oxyde de zinc, ou encore oxyde d'antimoine/oxyde de zinc, ou d'une unique couche en nitrure de silicium.

Le second revêtement diélectrique, c'est-à-dire celui qui est disposé au-dessus de la couche fonctionnelle, comprend de préférence également au moins une couche d'oxyde ou de nitrure d'indice de réfraction d'au moins 1,7 à 1,8, comme l'oxyde d'étain (SnO₂), l'oxyde de niobium (Nb₂O₅), de titane (TiO₂), de zinc (ZnO), de tantale (Ta₂O₅) ou encore en nitrure comme le nitrure de silicium (Si₃N₄). Son épaisseur géométrique totale, comme celle du premier revêtement, est avantageusement choisie entre 30 et 55 nm.

De manière connue, on peut prévoir de disposer entre couche fonctionnelle et second revêtement diélectrique une fine couche métallique de protection, qui s'oxyde partiellement « à la place » de la couche fonctionnelle quand le second revêtement est constitué par une ou plusieurs couches d'oxyde déposée(s) par pulvérisation réactive en présence d'oxygène. Elle est de préférence à base d'un métal comme le niobium Nb, le tantale Ta, le titane Ti, le chrome Cr, le nickel Ni ou un alliage d'au moins deux de ces métaux comme un alliage Ni-Cr. Si elle n'est destinée qu'à remplir ce rôle de couche « sacrificielle », elle peut être extrêmement mince, notamment de l'ordre de 0,2 à 1,5 et de préférence de 0,5 à 1,5 nm, afin de pénaliser le moins possible l'empilement en termes de transmission lumineuse. On peut aussi lui conférer une épaisseur pouvant aller jusqu'à 10 nm si on l'utilise également pour « régler » la valeur de transmission lumineuse au niveau voulu, quand on vise plutôt la fabrication de vitrages anti-solaires à T_{L} réduite.

L'invention concerne aussi bien sûr tout vitrage, et notamment tout vitrage multiple bas-émissif ou anti-solaire, incorporant un substrat muni des couches minces précédemment décrites. Elle s'applique tout particulièrement aux doubles-vitrages bas-émissifs contenant au moins un tel substrat, et présentant une émissivité d'au plus 0,035, une T_{L} d'au moins 78% et une valeur de saturation de coloration en réflexion c^{*} dans le système de colorimétrie (L, a^{*}, b^{*}) d'au plus environ 4. Les vitrages selon l'invention offrent ainsi la possibilité d'atteindre des valeurs très faibles d'émissivité, sans avoir à « sacrifier » l'aspect optique, c'est-à-dire en conservant une haute T_{L} et une grande neutralité de couleur en réflexion.

On peut aussi monter les substrats munis des couches de l'invention en vitrages feuilletés, surtout pour des véhicules, aussi bien en tant que vitrages anti-solaires qu'en tant que vitrages chauffants. Dans ce dernier cas, on prévoit alors les amenées de courant adhoc pour la couche fonctionnelle, qui présente également des propriétés de conduction électrique.

L'invention concerne également les modes d'obtention des substrats munis des empilements précédemment décrits : on peut avantageusement utiliser des techniques de dépôt de couches utilisant le vide telles que l'évaporation ou la pulvérisation cathodique éventuellement assistée par champ magnétique.

Lorsqu'on a recours à des substrats aptes à supporter des hautes températures, comme des substrats en verre, on peut également déposer certaines des couches de l'empilement, celles à base d'oxyde ou de nitrure tout particulièrement, par des techniques de pyrolyse en phase solide, liquide ou gazeuse (appelée alors CVD pour « Chemical Vapor Deposition »). Il peut s'avérer intéressant de combiner les deux types de techniques, et de déposer ainsi la couche intermédiaire, quand elle est à base d'oxyde ou d'oxyfluorure, directement sur le verre d'un ruban de verre float par pyrolyse, puis les autres couches de l'empilement en reprise, sur le verre une fois découpé, par pulvérisation cathodique, et cela tout particulièrement quand la couche fonctionnelle est choisie métallique, notamment en argent. Quand on choisit une couche intermédiaire à base d'oxyfluorure d'aluminium, on peut donc la déposer soit par pulvérisation, soit par pyrolyse, notamment par pyrolyse en phase vapeur à partir d'un précurseur organo-métallique, notamment à fonction alcoolate ou β-dicétone du type acétylacétonate d'aluminium ou méthyl 2-heptadione 4,6 auxquels on peut substituer au moins un de leurs atomes d'hydrogène par du fluor. Il peut ainsi s'agir d'un acétylacétonate hexafluoré ou un trifluoroacétonate d'aluminium. Pour garantir un taux de fluor suffisamment important pour obtenir l'indice de réfraction souhaité, on peut par exemple adjoindre à ce précurseur un gaz précurseur de fluor du type CF₄.

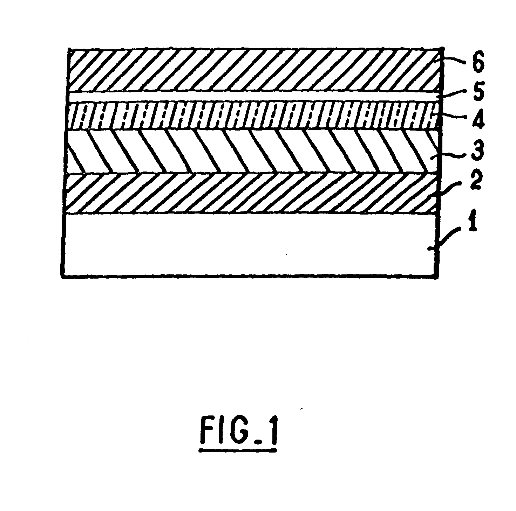

Les détails et caractéristiques avantageuses de l'invention vont maintenant ressortir des exemples suivants, non limitatifs, à l'aide de la figure 1.

On précise que, dans tous les exemples, les dépôts successifs de couches minces se font par une technique de pulvérisation cathodique assistée par champ magnétique, mais pourraient aussi être réalisés par toute autre technique permettant une bonne maîtrise des épaisseurs de couches obtenues. Les substrats sur lesquels sont déposés les empilements de couches minces sont des substrats de verre silico-sodo-calcique clair du type Planilux de 4 mm d'épaisseur, commercialisés par SAINT-GOBAIN VITRAGE. Leur indice de réfraction est d'environ 1,52.

A la figure 1, le substrat en verre est surmonté de la couche intermédiaire 2 selon l'invention puis de l'empilement 7 de couches minces comprenant un premier revêtement diélectrique 3, une couche d'argent 4, une fine couche de protection de l'argent 5 et enfin le second revêtement diélectrique 6. Cette figure est bien sûr très schématique et, pour plus de clarté, ne respecte pas les proportions quant aux épaisseurs des divers matériaux représentés.

Les exemples 1 à 4 sont réalisés conformément à l'invention. Les exemples suivants sont des exemples comparatifs.

### EXEMPLE 1

On dépose sur un substrat (1) en verre la séquence de couches suivantes : 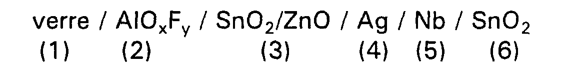
- La couche d'AlOₓF_{y} « intermédiaire» selon l'invention a une épaisseur de 30 nm. Elle est déposée à partir d'une cible d'aluminium dans une atmosphère réactive faite d'un mélange d'O₂, Ar et CF₄. Son indice de réfraction est de 1,37.
- La couche de SnO₂ a une épaisseur de 15 nm. Elle est déposée à partir d'une cible d'étain dans une atmosphère réactive d'O₂/Ar.
- La couche de ZnO a une épaisseur de 20 nm. Elle est déposée à partir d'une cible de zinc dans une atmopshère réactive d'O₂/Ar.
- La couche d'argent a une épaisseur de 11 nm. Elle est déposée à partir d'une cible d'argent en atmosphère argon.
- La couche de protection a une épaisseur de 1 nm et elle est en niobium, déposée à partir d'une cible de Nb en atmosphère argon. Elle s'oxyde au moins partiellement lors du dépôt de la couche suivante.
- La couche de SnO₂ suivante est déposée comme la précédente couche de SnO₂. Elle a une épaisseur de 44 nm.

### EXEMPLE 2

On dépose sur un substrat (1) de verre la séquence de couches suivantes : 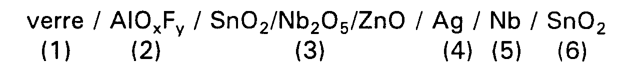 Les conditions de dépôt sont les mêmes que dans l'exemple 1. Seules changent les épaisseurs impliquées et le fait qu'on a ajouté une couche de Nb₂O₅ dans le premier revêtement diélectrique (3), déposée à partir d'une cible de Nb dans une atmosphère Ar/O₂ :
- la couche d'AlOₓF_{y} : 45 nm
- la première couche de SnO₂ : 20 nm
- la couche de Nb₂O₅ : 8 nm
- la couche de ZnO : 12 nm
- la couche d'Ag : 12 nm
- la couche de Nb : 1 nm
- la seconde couche de SnO₂ : 46 nm.

### EXEMPLE 3

On dépose sur un substrat (1) en verre la séquence de couches suivantes : 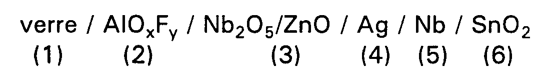 Par rapport à l'exemple 2, a donc été cette fois simplement supprimée la première couche d'oxyde d'étain. Les épaisseurs de couches sont les suivantes :
- la couche d'AlOₓF_{y} : 40 nm
- la couche de Nb₂O₅ : 8 nm
- la couche de ZnO : 27 nm
- la couche d'Ag : 12 nm
- la couche de Nb : 1 nm
- la couche de SnO₂ : 46 nm.

### EXEMPLE 4

II reprend la séquence de l'exemple 2 : 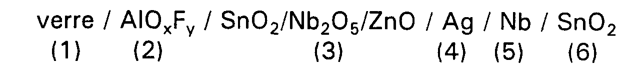 en modifiant l'épaisseur de certaines des couches :
- la couche d'AlOₓF_{y} : 45 nm
- la première couche de SnO₂ : 11 nm
- la couche de Nb₂O₅ : 12 nm
- la couche de ZnO : 10 nm
- la couche d'Ag : 13 nm
- la couche de Nb : 1 nm
- la seconde couche de SnO₂ : 45 nm.

### EXEMPLE COMPARATIF 5

II s'agit de la même séquence de couches qu'à l'exemple 2, mais dépourvue de la première couche en AlOₓF_{y} selon l'invention :

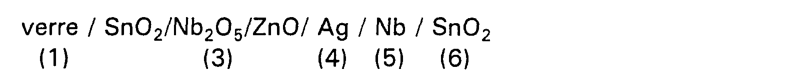

### EXEMPLE COMPARATIF 6

II s'agit de la même séquence de couches qu'à l'exemple 3, mais là encore sans la première couche en AlOₓF_{y} :

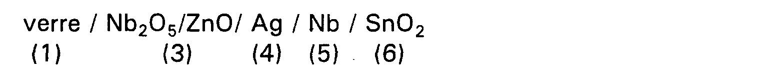

### EXEMPLE COMPARATIF 7

Il s'agit de la même séquence de couches qu'à l'exemple 4, mais sans première couche d'AlOₓFy :

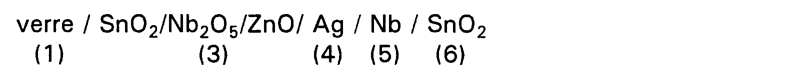

Chacun de ces 7 substrats est ensuite monté en double-vitrage, avec un autre substrat identique mais dépourvu de couches. La lame de gaz intercalaire entre les substrats est en argon et a une épaisseur de 15 mm.
Le tableau 1 ci-dessous indique, pour ces 7 doubles vitrages, les données suivantes : la valeur de transmission lumineuse T_{L} en %, la valeur de facteur solaire FS (sans unité qui correspond au rapport de l'énergie totale traversant le vitrage sur l'énergie solaire incidente, d'après la norme ISO 9050), la valeur d'émissivité ε sans unité et la valeur de transmission thermique surfacique appelée facteur K et exprimée en W/m².K. Sont indiquées aussi la valeur de réflexion lumineuse extérieure R_{L ext} en %, ainsi que les valeurs de a^{*}, b^{*} et c^{*}, sans unité, de la coloration en réflexion selon le système de colorimétrie (L, a^{*}, b^{*}). Les mesures photométriques se font selon l'illuminant D₆₅.

**TABLEAU 1**

| | **T**_{**L**} | **FS** | **ε** | **K** | **R**_{**L ext**} | **a*** | **b*** | **c*** |
|---|---|---|---|---|---|---|---|---|
| Exemple 1 | 78 | 58 | 0,044 | 1,14 | 12 | 1 | -3 | 3,2 |
| Exemple 2 | 79 | 59 | 0,035 | 1,10 | 12 | 0,8 | -3 | 3,1 |
| Exemple 3 | 78 | 59 | 0,035 | 1,10 | 12 | 1,2 | -2,5 | 2,8 |
| Exemple 4 | 77 | 56 | 0,030 | 1,08 | 14 | 1,1 | -4 | 4,1 |
| Ex. 5 comparatif | 79 | 59 | 0,035 | 1,10 | 12 | 3,2 | -7 | 7,7 |
| Ex. 6 comparatif | 78 | 59 | 0,035 | 1,10 | 12 | 3,6 | -6,5 | 7,4 |
| Ex. 7 comparatif | 77 | 56 | 0,030 | 1,08 | 14 | 3,5 | -8 | 8,7 |

De ce tableau 1 peuvent être tirées les conclusions suivantes :
- Les exemples comparatifs 5 à 7 suivent en fait l'enseignement de la demande de brevet français déjà mentionnée, en ce sens qu'ils utilisent sous l'argent une superposition de couches d'oxyde particulièrement favorable à la cristallisation et à la qualité de la couche fonctionnelle, ce qui permet déjà d'atteindre des valeurs d'émissivité tout-à-fait intéressantes. Ainsi, l'exemple 5 n'utilisant une couche d'argent que de 12 nm permet d'arriver à une valeur d'émissivité de 0,035, bien plus faible que la valeur d'émissivité que l'on pourrait obtenir pour une couche d'argent de même épaisseur disposée par exemple entre deux couches d'oxydes d'étain dans un empilement du type : 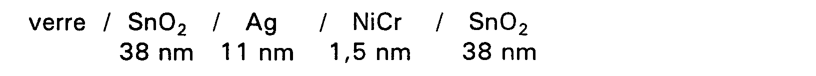 (à titre de comparaison, avec cet empilement, on obtient une valeur d'émissivité de l'ordre de 0,077 pour une T_{L} de 78%).
- Cependant, cette amélioration a des limites : en réflexion, la valeur de la saturation c* donnée par la formule (a*² + b*²)^{1/2} est déjà, pour 12 nm d'argent, proche de 8, ce qui traduit une coloration déjà trop intense si l'on vise la fabrication de vitrages très neutres en réflexion.
- Les exemples selon l'invention résolvent ce dilemme en intercalant une couche à très faible indice entre le verre et l'empilement : à épaisseurs de couche d'argent égales, l'aspect optique en réflexion est bien meilleur. Ainsi, si l'on fait la comparaison entre l'exemple comparatif 5 et l'exemple 2, on voit que l'invention permet de diviser la valeur de c^{*} par au moins un facteur 2. On retrouve ce même facteur 2 entre les saturations de l'exemple 4 et de l'exemple comparatif 7, ou entre les saturations de l'exemple 3 et de l'exemple comparatif 6.

Cela signifie que l'invention autorise l'utilisation de couches d'argent de 13 nm au moins pour faire des vitrages très performants thermiquement qui restent acceptables sur le plan colorimétrique.

L'invention est aussi avantageuse dans le cas où l'on utilise des couches d'argent plus minces, car on améliore encore l'aspect colorimétrique, en rendant encore plus « neutre » la couleur en réflexion du vitrage.

De même, on peut utiliser l'invention dans des empilements type diélectrique/argent/diélectrique ne faisant pas appel, sous l'argent, à des couches à pouvoir « mouillant » du type ZnO ou Nb₂O₅ : la couche à bas indice intermédiaire selon l'invention apporte dans tous les cas une amélioration de la colorimétrie en réflexion, quel que soit le « niveau d'émissivité » que l'on vise.

Pour confirmer ce dernier point, des modélisations mathématiques ont été effectuées sur la base des trois empilements suivants :
a) verre /SnO₂ / Ag / NiCr / SnO₂
   3 mm 40 nm 10 nm 5 nm 42 nm
b) verre /AlOₓF_{y} / Ag / NiCr /SnO₂
   3 mm 45 nm 10 nm 5 nm 42 nm
c) verre /AlOₓF_{y} / Ag / NiCr /SnO₂
   3 mm 60 nm 12 nm 5 nm 42 nm

Ces vitrages utilisent des couches de NiCr relativement épaisses par rapport aux empilements précédemment décrits, et visent donc plutôt des applications anti-solaires avec des valeurs de T_{L} plus faibles (au plus 70 à 75%).

Des calculs d'aspect colorimétrique en réflexion ont été réalisés avec ces trois substrats ainsi recouverts, en considérant qu'ils sont montés en double vitrages avec un second substrat de même épaisseur et caractéristiques (verre clair). Les résultats en valeurs de a*, b*, c* sont regroupés dans le tableau 2 ci-dessous :

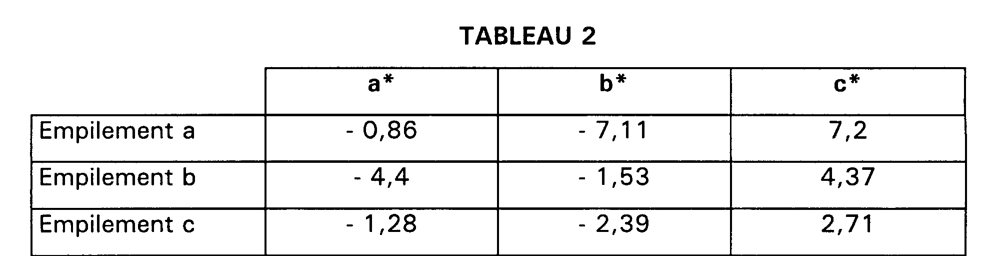

On voit donc que la modélisation confirme les résultats expérimentaux obtenus avec la première série d'exemples visant plutôt une fabrication de vitrages à haute T_{L} : avec l'empilement b contenant la couche à bas indice, on atteint une valeur de saturation c* significativement plus faible qu'avec l'empilement a qui en est dépourvu. Quant à l'empilement c, très efficace en termes de sélectivité puisqu'il a une épaisseur de couche d'argent relativement épaisse de 12 nm, il voit sa valeur de saturation c* chuter considérablement par la présence de la sous-couche à bas indice dont l'épaisseur a été un peu augmentée.

On peut par ailleurs noter que les couches à très faible indice peuvent aussi trouver une autre application : en les intercalant entre substrat transparent et empilement de couches minces anti-reflet alternant couches à haut et bas indices de réfraction, on observe une certain amélioration des performances du revêtement anti-reflet, notamment une diminution de sa sensibilité aux variations d'épaisseurs des couches minces qui le constituent : l'aspect optique du vitrage ainsi traité anti-reflet en est plus homogène.

## Revendications

1. Vitrage présentant une haute transmission lumineuse incorporant un substrat transparent (1), muni d'un empilement (7) de couches minces comportant au moins une couche (4) à propriétés de bas-émissivité et de conductivité électrique, à base d'argent ou à base d'oxyde métallique dopé, disposée entre un premier et un second revêtements diélectriques (3, 6), **caractérisé en ce qu'**est disposée entre substrat (1) et empilement (7) une couche intermédiaire (2) en un matériau d'indice de réfraction inférieur à celui du substrat (1), de manière à ce que la différence d'indices de réfraction entre le substrat (1) et ladite couche (2) soit d'au moins 0,07, et de préférence d'au moins 0,12.

2. Vitrage (1) selon la revendication 1, **caractérisé en ce que** ledit substrat est en verre, à base de polymère rigide du type polyacrylique ou polycarbonate, ou à base de polymère flexible du type polyester, polyimide, polyéthylène, polypropylène, polyéthylènetéraphtalate.

3. Vitrage (1) selon la revendication 1 ou 2, **caractérisé en ce que** l'épaisseur géométrique de la couche intermédiaire (2) est comprise entre 20 et 120 nm, de préférence entre 30 et 60 nm.

4. Vitrage (1) selon l'une des revendications 1 à 3, **caractérisé en ce que** la couche intermédiaire (2) a un indice de réfraction inférieur ou égal à 1,45, notamment inférieur ou égal à 1,40, de préférence compris entre 1,30 et 1,38.

5. Vitrage (1) selon l'une des revendications précédentes, **caractérisé en ce que** la couche intermédiaire (2) est de nature minérale, en oxyde comme l'oxyde de silicium SiOₓ peu dense, en oxyfluorure d'aluminium AlOₓF_{y} ou en fluorure comme le fluorure de magnésium MgF₂ ou le fluorure d'aluminium AlF₃.

6. Vitrage (1) selon la revendication 5, **caractérisé en ce que** la couche intermédiaire (2) à base d'oxyde ou d'oxyfluorure est déposée par pulvérisation cathodique ou par pyrolyse, notamment par CVD.

7. Vitrage (1) selon l'une des revendications 1 à 4, **caractérisé en ce que** la couche intermédiaire (2) est de nature organique, notamment d'indice de réfraction d'au plus 1,35.

8. Vitrage (1) selon la revendication 7, **caractérisé en ce que** la couche intermédiaire (2) est à base de polymères organo-siliciés, notamment déposés par CVD plasma.

9. Vitrage (1) selon la revendication 7, **caractérisé en ce que** la couche intermédiaire (2) est à base de polymères fluorés et/ou polyacrylates mono ou poly-fonctionnels, comme le perfluoropolyétherdiacrylate.

10. Vitrage (1) selon la revendication 9, **caractérisé en ce que** la couche intermédiaire est déposée sous vide, par évaporation de monomères volatils ou atomisation en micro-gouttelettes de monomères liquides, puis par réticulation par irradiation du type rayonnements ultraviolets ou faisceau d'ions.

11. Vitrage (1) selon l'une des revendications 7 à 10, **caractérisé en ce que** la couche intermédiaire (2) organique se présente sous la forme d'un film d'au moins 2 micromètres d'épaisseur, notamment d'une épaisseur comprise entre 5 et 50 micromètres.

12. Vitrage (1) selon l'une des revendications précédentes, **caractérisé en ce que** la couche (4) à propriétés de réflexion dans l'infrarouge et/ou dans le domaine du rayonnement solaire est à base d'argent, notamment d'une épaisseur de 7 à 13 nm, pour conférer au substrat des propriétés de bas-émissivité.

13. Vitrage (1) selon l'une des revendications précédentes, **caractérisé en ce que** l'empilement de couches comprend plusieurs couches (4) à propriétés de réflexion dans l'infrarouge et/ou dans le domaine du rayonnement solaire, notamment intercalées par des couches de matériau diélectrique, par exemple 2 ou 3 couches à base d'argent.

14. Vitrage (1) selon l'une des revendications précédentes, **caractérisé en ce que** le premier revêtement diélectrique (3) comprend au moins une couche en oxyde ou nitrure d'indice de réfraction d'au moins 1,7 à 1,8, avec une épaisseur géométrique totale comprise entre 30 et 55 nm.

15. Vitrage (1) selon la revendication 14, **caractérisé en ce que** le premier revêtement diélectrique (3) comprend au moins une couche d'un matériau choisi dans le groupe SnO₂, Nb₂O₅, ZnO, TiO₂, Ta₂O₅, Si₃N₄, WO₃, Sb₂O₅, Bi₂O₃, et notamment est composé d'une couche de SnO₂ ou Si₃N₄ ou d'une séquence Nb₂O₅/ZnO, ou Ta₂O₅/ZnO, ou SnO₂/Nb₂O₅/ZnO, ou WO₃/ZnO ou Sb₂O₅/ZnO, SnO₂/ZnO.

16. Vitrage (1) selon l'une des revendications précédentes, **caractérisé en ce que** le second revêtement diélectrique (6) comprend au moins une couche en oxyde ou nitrure d'indice de réfraction d'au moins 1,7 à 1,8 comme SnO₂, Nb₂O₅, ZnO, TiO₂, Ta₂O₅, Si₃N₄, avec une épaisseur géométrique totale comprise entre 30 et 55 nm.

17. Vitrage (1) selon l'une des revendications précédentes, **caractérisé en ce qu'**est disposée sur la couche (4) à propriétés de réflexion dans l'infrarouge et/ou dans le domaine du rayonnement solaire et sous le second revêtement de matériau diélectrique (6) une fine couche de protection en métal partiellement oxydé choisi parmi le Nb, Ta, Ti, Cr, Ni, et alliages d'au moins deux de ces métaux, d'une épaisseur de 0,2 à 1,5 nm.

18. Vitrage selon l'une des revendications précédentes , **caractérisé en ce qu**'il s'agit d'un vitrage multiple.

19. Double-vitrage bas-émissif selon la revendication 18, **caractérisé en ce qu'**il présente une émissivité d'au plus 0,035, une transmission lumineuse T_{L} d'au moins 78% et une valeur de saturation de couleur en réflexion c^{*} d'au plus environ 4.

20. Vitrage selon l'une des revendication 1 à 17 **caractérisé en ce qu'**il s'agit d'un vitrage feuilleté **et en ce qu**'il est bas-émissif et/ou chauffant en prévoyant des amenées de courant pour la (les) couche(s) à propriétés de bas-émissivité et de conductivité électrique.

## Claims

1. Glazing having a high light transmission incorporating a transparent substrate (1), provided with a stack (7) of films having at least one film (4) with low-emissivity and electrical conductivity properties, based on silver or based on doped metal oxide, placed between a first and a second dielectric coatings (3, 6), characterized in that between the substrate (1) and the stack (7) is placed an intermediate film (2) of a material having a refractive index lower than that of the substrate (1), so that the refractive index difference between the substrate (1) and said film (2) is at least 0.07 and preferably at least 0.12.

2. Glazing (1) according to claim 1, characterized in that said substrate is of glass, based on rigid polymer of the polacrylic or polycarbonate type, or based on flexible polymer of the polyester, polyimide, polyethylene, polypropylene or polyethylene terephthalate type.

3. Glazing (1) according to claim 1 or 2, characterized in that the geometrical thickness of the intermediate film (2) is between 20 and 120 nm, preferably between 30 and 60 nm.

4. Glazing (1) according to one of the claims 1 to 3, characterized in that the intermediate film (2) has a refractive index equal to or lower than 1.45, particularly equal to or lower than 1.40 and preferably between 1.30 and 1.38.

5. Glazing (1) according to one of the preceding claims, characterized in that the intermediate film (2) is of a mineral nature and of not very dense oxide such as silicon oxide SiOₓ, aluminium oxyfluoride AlOₓF_{y} or of fluoride such as magnesium fluoride MgF2 or aluminium fluoride AlF3.

6. Glazing (1) according to claim 5, characterized in that the intermediate film (2) based on oxide or oxyfluoride is deposited by cathodic sputtering or by pyrolysis, particularly by CVD.

7. Glazing (1) according to one of the claims 1 to 4, characterized in that the intermediate film (2) is of an organic nature, particularly with a refractive index of at the most 1.35.

8. Glazing (1) according to claim 7, characterized in that the intermediate film (2) is based on organosilicon polymers, particularly deposited by plasma CVD.

9. Glazing (1) according to claim 7, characterized in that the intermediate film (2) is based on fluorine polymers and/or monofunctional or polyfunctional polyacrylates, such as perfluoropolyetherdiacrylate.

10. Glazing (1) according to claim 9, characterized in that the intermediate film is deposited in vacuo, by the evaporation of volatile monomers or atomization into microdroplets of liquid monomers, followed by crosslinking by irradiation of the ion beam or ultraviolet radiation type.

11. Glazing (1) according to one of the claims 7 to 10, characterized in that the intermediate, organic film (2) is in the form of an at least 2 micrometre thick film, particularly having a thickness between 5 and 50 micrometres.

12. Glazing (1) according to one of the preceding claims, characterized in that the film (4) having reflection properties in the infrared and/or in the solar radiation field is based on silver and has in particular a thickness of 7 to 13 nm to give the substrate low-emissivity properties.

13. Glazing (1) according to one of the preceding claims, characterized in that the stack of films comprises several films (4) having reflection properties in the infrared and/or in the solar radiation field, particularly intercalated by dielectric material films, for example two or three silver-based films.

14. Glazing (1) according to one of the preceding claims, characterized in that the first dielectric coating (3) comprises at least one oxide or nitride film having a refractive index of at least 1.7 to 1.8 with a total geometrical thickness between 30 and 55 nm.

15. Glazing (1) according to claim 4, characterized in that the first dielectric coating (3) comprises at least one film of a material chosen from within the group SnO₂, Nb₂O₅, ZnO, TiO₂, Ta₂O₅, Si₃N₄, WO₃, Sb₂O₅, Bi₂O₃, and in particular is composed of a film of SnO₂ or Si₃N₄ or a sequence Nb₂O₅/ZnO, or Ta₂O₅/ZnO, or SnO₂/Nb₂O₅/ZnO, or WO₃/ZnO or Sb₂O₅/ZnO, SnO₂/ZnO.

16. Glazing (1) according to one of the preceding claims, characterized in that the second dielectric coating (6) comprises at least one oxide or nitride film with a refractive index of at least 1.7 to 1.8 such as SnO₂, Nb₂O₅, ZnO, TiO₂, Ta₂O₅, and Si₃N₄, with a total geometrical thickness between 30 and 55 nm.

17. Glazing (1) according to one of the preceding claims, characterized in that on the film (4) having reflection properties in the infrared and/or in the solar radiation field and beneath the second dielectric material coating (6) is placed a thin protective film of a partly oxidized metal chosen from among Nb, Ta, Ti, Cr, Ni and alloys of at least two of said metals and having a thickness of 0.2 to 1.5 nm.

18. Glazing according to one of the preceding claims, characterized in that it is a multiple glazing.

19. Low-emissive double glazing according to claim 18, characterized in that it has an emissivity of at the most 0.035, a light transmission T_{L} of at the least 78% and a colour saturation value in reflection C^{*} of at the most approximately 4.

20. Glazing according to one of the claims 1 to 17, characterized in that it is a laminated glazing and in that it is low-emissive and/or heated by providing current leads for the film or films having low-emissivity and electrical conductivity properties.

## Patentansprüche

1. Verglasung, welche einen hohen Lichttransmissionsgrad aufweist und ein transparentes Substrat (1) enthält, das mit einem Aufbau (7) aus dünnen Schichten versehen ist, der mindestens eine elektrisch leitfähige, niedrig emittierende Schicht (4) auf der Basis von Silber oder dotiertem Metalloxid umfasst, die zwischen einer ersten (3) und einer zweiten dielektrischen Beschichtung (6) angeordnet ist, **dadurch gekennzeichnet, dass** zwischen Substrat (1) und Aufbau (7) eine Zwischenschicht (2) aus einem Material mit einem Brechungsindex, der kleiner als derjenige des Substrats (1) ist, derart angeordnet ist, dass die Differenz der Brechungsindizes von Substrat (1) und Schicht (2) mindestens 0,07 und vorzugsweise mindestens 0,12 beträgt.

2. Verglasung (1) nach Anspruch 1, **dadurch gekennzeichnet**, **dass** das Substrat aus Glas besteht, auf der Basis eines starren Polymers vom Typ Polyacryl bzw. Polycarbonat oder eines elastischen Polymers vom Typ Polyester, Polyimid, Polyethylen, Polypropylen und Polyethylenterephthalat ist.

3. Verglasung (1) nach Anspruch 1 oder 2, **dadurch gekennzeichnet, dass** die geometrische Dicke der Zwischenschicht (2) 20 bis 120 nm und vorzugsweise 30 bis 60 nm beträgt.

4. Verglasung (1) nach einem der Ansprüche 1 bis 3, **dadurch gekennzeichnet, dass** der Brechungsindex der Zwischenschicht (2) weniger als oder gleich 1,45, insbesondere weniger als oder gleich 1,40 und vorzugsweise 1,30 bis 1,38 beträgt.

5. Verglasung (1) nach einem der vorhergehenden Ansprüche, **dadurch gekennzeichnet, dass** die Zwischenschicht (2) mineralischen Charakter hat, aus einem Oxid wie nicht sehr dichtem Siliciumoxid, SiOₓ, Aluminiumfluoridoxid, AlOₓFy, oder einem Fluorid wie Magnesiumfluorid, MgF₂, bzw. Aluminiumfluorid, AlF₃, besteht.

6. Verglasung (1) nach Anspruch 5, **dadurch gekennzeichnet, dass** die Zwischenschicht (2) auf der Basis eines Oxids bzw. Fluoridoxids durch Kathodenzerstäubung oder Pyrolyse, insbesondere CVD, aufgebracht worden ist.

7. Verglasung (1) nach einem der Ansprüche 1 bis 4, **dadurch gekennzeichnet, dass** die Zwischenschicht (2) einen organischen Charakter und insbesondere einen Brechungsindex von höchstens 1,35 besitzt.

8. Verglasung (1) nach Anspruch 7, **dadurch gekennzeichnet, dass** die Zwischenschicht (2) auf der Basis von siliciumorganischen Polymeren und insbesondere durch Plasma-CVD aufgebracht ist.

9. Verglasung (1) nach Anspruch 7, **dadurch gekennzeichnet, dass** die Zwischenschicht (2) auf der Basis fluorhaltiger Polymerer und/oder mono- oder polyfunktioneller Polyacrylate wie Perfluorpolyetherdiacrylat ist.

10. Verglasung (1) nach Anspruch 9, **dadurch gekennzeichnet, dass** die Zwischenschicht im Vakuum und durch Aufdampfen flüchtiger Monomerer oder Zerstäubung flüssiger Monomerer zu Mikrotröpfchen und anschließende Vernetzung durch Strahlung vom Typ Ultraviolettstrahlung oder Ionenstrahlenbündel aufgebracht worden ist.

11. Verglasung (1) nach einem der Ansprüche 7 bis 10, **dadurch gekennzeichnet, dass** die organische Zwischenschicht (2) in Form eines Films mit mindestens 2 Mikrometern Dicke und insbesondere mit einer Dicke von 5 bis 50 Mikrometern vorliegt.

12. Verglasung (1) nach einem der vorhergehenden Ansprüche, **dadurch gekennzeichnet, dass** die Schicht (4) mit Reflexionseigenschaften im Infrarot und/oder im Bereich der Sonneneinstrahlung auf der Basis von Silber ist und insbesondere eine Dicke von 7 bis 13 nm hat, um dem Substrat niedrig emittierende Eigenschaften zu verleihen.

13. Verglasung (1) nach einem der vorhergehenden Ansprüche, **dadurch gekennzeichnet, dass** der Schichtaufbau mehrere Schichten (4) mit Reflexionseigenschaften im Infrarot und/oder im Bereich der Sonneneinstrahlung, beispielsweise 2 oder 3 Schichten auf Silberbasis, umfasst, wobei insbesondere Schichten aus dielektrischem Material dazwischengelegt sind.

14. Verglasung (1) nach einem der vorhergehenden Ansprüche, **dadurch gekennzeichnet, dass** die erste dielektrische Beschichtung (3) mindestens eine Oxid- oder Nitridschicht mit einem Brechungsindex von mindestens 1,7 bis 1,8 und einer geometrischen Gesamtdicke von 30 bis 55 nm enthält.

15. Verglasung (1) nach Anspruch 14, **dadurch gekennzeichnet, dass** die erste dielektrische Beschichtung (3) mindestens eine Schicht aus einem Material enthält, das aus der aus SnO₂, Nb₂O₅, ZnO, TiO₂, Ta₂O₅, Si₃N₄, WO₃, Sb₂O₅ und Bi₂O₃ bestehenden Gruppe ausgewählt ist, und insbesondere aus einer SnO₂- bzw. Si₃N₄-Schicht oder aus einer Abfolge von Nb₂O₅/ZnO, Ta₂O₅/ZnO, SnO₂/Nb₂O₅/ZnO, WO₃/ZnO, Sb₂O₅/ZnO oder SnO₂/ZnO besteht.

16. Verglasung (1) nach einem der vorhergehenden Ansprüche, **dadurch gekennzeichnet, dass** die zweite dielektrische Beschichtung (6) mindestens eine Schicht aus einem Oxid oder Nitrid wie SnO₂, Nb₂O₅, ZnO, TiO₂, Ta₂O₅ und Si₃N₄ mit einem Brechungsindex von mindestens 1,7 bis 1,8 und einer geometrischen Gesamtdicke von 30 bis 55 nm enthält.

17. Verglasung (1) nach einem der vorhergehenden Ansprüche, **dadurch gekennzeichnet, dass** auf der Schicht (4) mit Reflexionseigenschaften im Infrarot und/oder im Bereich der Sonneneinstrahlung und unter der zweiten Beschichtung (6) aus dielektrischem Material eine feine Getterschicht aus teilweise oxidiertem Metall, das aus Nb, Ta, Ti, Cr, Ni und Legierungen aus mindestens zwei dieser Metalle ausgewählt ist, mit einer Dicke von 0,2 bis 1,5 nm angeordnet ist.

18. Verglasung nach einem der vorhergehenden Ansprüche, **dadurch gekennzeichnet, dass** es sich um eine Mehrfachverglasung handelt.

19. Niedrig emittierende Doppelverglasung nach Anspruch 18, **dadurch gekennzeichnet, dass** sie einen Emissionskoeffizienten von höchstens 0,035, einen Lichttransmissionsgrad T_{L} von mindestens 78 % und einen Farbsättigungswert bei Reflexion c^{*} von höchstens etwa 4 aufweist.

20. Verglasung nach einem der Ansprüche 1 bis 17, **dadurch gekennzeichnet, dass** es sich um eine Verbundverglasung handelt, **und dass** sie niedrig emittierend und/oder beheizbar ist, indem für die Schicht/en mit elektrisch leitfähigen, niedrig emittierenden Eigenschaften Stromzuführungen vorgesehen werden.
